# EUROPÄISCHE PATENTSCHRIFT

(11) **EP 1 341 846 B1**
(45) Veröffentlichungstag und Bekanntmachung des Hinweises auf die Patenterteilung: **02.08.2006**
(21) Anmeldenummer: 01990547.0
(22) Anmeldetag: 12.12.2001
(51) Int. Cl.: C08L 61/28, C08G 12/32, C08G 12/38, C08L 61/30

(54) **VERFAHREN ZUM HÄRTEN VON AMINOPLASTHARZEN**
METHOD FOR CURING AMINOPLAST RESINS
PROCEDE POUR DURCIR DES RESINES AMINOPLASTES

(30) Priorität: 15.12.2000 AT 20882000
(43) Veröffentlichungstag der Anmeldung: 10.09.2003
(73) Patentinhaber: AMI Agrolinz Melamine International GmbH, 4020 Linz (AT)
(72) Erfinder: RÄTZSCH, Manfred, A-4062 Wilhering/Thalheim (AT); DICKE, René, A-4030 Linz (AT); JOCHAM, Daniel, A-4020 Linz (AT)
(74) Vertreter: Gross, Felix
(86) Internationale Anmeldenummer: PCT/EP2001/014582
(87) Internationale Veröffentlichungsnummer: WO 2002/048261

(56) Entgegenhaltungen:
- WO-A-00/49072
- WO-A-95/14733
- CA-A- 2 000 472
- US-A- 3 912 532

## Beschreibung

Die Erfindung betrifft die Verwendung von anorganischen Partikeln zum Härten vom Aminoplastharzen, ein Verfahren zum Härten von Aminoplastharzen mit verbesserter Zähigkeit sowie derart gehärtete Aminoplastharze.

Halbzeuge und Formstoffe aus Aminoplasten wie Pressteile, Spritzgussteile, Profile, Fasern, Schaumstoffe, Beschichtungen und Laminate sind bekannt (Ullmanns Encyclopedia of Industrial Chemistry, 4. Auflage, Vol. A2, 115-141). Von Nachteil bei den Halbzeugen und Formstoffen aus Aminoplasten ist deren geringe Zähigkeit.

Es sind eine Reihe von Verfahren bekannt, die Zähigkeit von Halbzeugen und Formstoffen aus Aminoplasten zu verbessern.

Formstoffe aus Melaminharzen erhöhter Zähigkeit erzielt man durch Melaminharzrezepturen, bei denen die Melaminkomponente teilweise durch Hydroxy-oxyalkyl-Gruppen substituierte Melamine ersetzt ist (EP 0 408 947), oder durch Einbau von Glycolen in das Melaminharz (EP 0 149 652). Bei der Herstellung von Melaminharz-Schaumstoffen wird eine Verbesserung der Zähigkeit erreicht, wenn Verschäumung und Vernetzung unter Einsatz von Mikrowellenbestrahlung erfolgt (EP 0 037 470). Die Sprödigkeit von Melaminharzlaminaten wird durch Einsatz von Melaminharzen reduziert, die Dicyandiamid und Polyalkohole eingebaut in die Melaminharzkomponente enthalten (WO 96 20 230).

Bei der Herstellung von Schaumstoffen auf Basis von Harnstoffharzen erzielt man Schaumstoffe verbesserter Zähigkeit, wenn mit Polyalkoholen wie Pentaerythrit, Arabit oder Sorbit (DAS 1 054 232) oder mit Polyethylenglycolen (US 2 807 595) modifizierte Harnstoff harze eingesetzt werden.

Die Zähigkeit von Halbzeugen und Formstoffen aus Aminoplasten wird weiterhin durch die eingesetzten Härter und den Grad der Aushärtung bestimmt. Bekannte Härter für Aminoplaste sind p-Toluolsulfonsäure, Naphthalinsulfonsäure, Phthalsäure, Maleinsäure und Amin- bzw. Ammoniumsalze von anorganischen Säuren (Woebcken, W., Kunststoff-Handbuch Bd. 10, 2. Aufl., Carl-Hanser-Verlag München 1988). Die Möglichkeiten der Verbesserung der Zähigkeit von Aminoplasten unter Steuerung des Härtungsverlaufs durch Härtungstemperatur und pH-Bereich sind jedoch begrenzt.

Die Einlagerung von Polymeren wie Polyethylenoxid oder Polystyren in Silikatschichtstrukturen mit intercalierten Alkali- und Erdalakli-Kationen ist ebenfalls bekannt (WO 95/14733). Diese Intercalationsverbindungen sind z.B. als Polymerelektrolyte in Batterien einsetzbar, wobei sie für diesen Verwendungszweck keiner besonderen Härte und Zähigkeit bedürfen.

Die Verwendung von mit Alkali- , Erdalkali- oder organischen Kationen modifizierten Schichtsilikaten zur Einlagerung in diverse Polymere ist auch in der WO 00/49072 beschrieben. Die daraus hergestellten Beschichtungen bedürfen jedoch zur Aushärtung eines zusätzlichen Härtungskatalysators.

Silikate mit Schichtstruktur in Form natürlicher Tonmineralien, die mit einem Harnstoff-Formaldehyd-Polymer überzogen sind und mit herkömmlichen Säuren ausgehärtet werden, finden insbesondere Verwendung in der Papierindustrie als Beschichtungsmaterial (US 3,912,532).

Von Nachteil bei diesen Verfahren ist es, dass die Zunahme der Zähigkeit mit einem Abfall der Festigkeit der Halbzeuge und Formstoffe verbunden ist.

Die Aufgabe der Erfindung bestand in der Entwicklung von Halbzeugen und Formstoffen aus Aminoplasten, die eine verbesserte Zähigkeit bei gleichzeitig hoher Festigkeit besitzen.

Überraschenderweise wurde gefunden, dass sich durch Einsatz von Härtern aus anorganischen Partikeln mit Schichtstruktur, die interlamellar austauschbare Kationen enthalten, Aminoplaste hoher Zähigkeit und Festigkeit herstellen lassen.

Gegenstand der Erfindung ist demnach die Verwendung von anorganischen Partikeln mit Schichtstruktur, die interlamellar austauschbare Kationen vom Typ Alkali-, Erdalkali-, Aluminium-, Eisen- und/oder Mangan-Kationen besitzen, zum Härten von Aminoplasten, ein Verfahren zur Herstellung von Aminoplastharzen mit verbesserter Zähigkeit unter Verwendung von anorganischen Partikeln mit Schichtstruktur, die interlamellar austauschbare Kationen vom Typ Aluminium-, Eisen- und/oder Mangan-Kationen besitzen
sowie ausgehärteten Aminoplastharze, die anorganischen Partikeln mit Schichtstruktur mit interlamellar austauschbare Kationen vom Typ Aluminium-, Eisen- und/oder Mangan-Kationen enthalten.

Die unter Verwendung der anorganischen Partikel ausgehärteten Aminoplastharze und die daraus hergestellten Halbzeuge und Formstoffe enthalten als Härter 1 bis 30 Masse%, bezogen auf die Halbzeuge und Formstoffe, anorganische Partikel mit Schichtstruktur, die interlamellar austauschbare Kationen vom Typ Aluminium-, Eisen- und/oder Mangan-Kationen besitzen, wobei die Halbzeuge und Formstoffe gegebenenfalls, jeweils bezogen auf die Aminoplastharze, 20 bis 5000 Masse% flächige Trägermaterialien, 1 bis 400 Masse% Füll- und/oder Verstärkerstoffe, 0,1 bis 5 Masse% polymere Dispergatoren und/oder .0,1 bis 5 Masse% übliche Zusatzstoffe enthalten können.

Bevorzugt sind die Halbzeuge und Formstoffe Pressteile, Spritzgussteile, Profile, Mikrokapseln, Fasern, geschlossenzellige oder offenzellige Schaumstoffe, Beschichtungen, Laminate, Schichtpressstoffe oder imprägnierte flächige Trägermaterialien.

Als Aminoplastharze werden Melaminharze, Harnstoffharze, Cyanamidharze, Dicyandiamidhar-ze, Guanaminharze, Sulfonamidharze und/oder Anilinharze bevorzugt.

Als Melaminharze werden Polykondensate aus Melamin bzw. Melaminderivaten und C₁-C₁₀-Aldehyden mit einem Molverhältnis Melamin bzw. Melaminderivat / C₁-C₁₀₋Aldehyden 1 : 1 bis 1: 6 sowie deren partielle Veretherungsprodukte mit C₁-C₁₀₋Alkoholen bevorzugt, wobei die Melaminderivate insbesondere durch Hydroxy-C₁₋C₁₀-alkylgruppen, Hydroxy-C₁-C₄-alkyl-(oxa-C₂-C₄-alkyl)₁₋₅-gruppen und/oder durch Amino-C₁-C₁₂-alkylgruppen substituierte Mela-mine, Diaminomethyltriazine und/oder Diaminophenyltriazine, besonders bevorzugt 2-(2-Hydroxyethylamino)-4,6-diamino-1,3,5-triazin, 2-(5-Hydroxy-3-oxapentylamino)-4,6-diamino-1,3,5-triazin und/oder 2,4,6-Tris-(6-aminohexylamino)-1,3,5-triazin Ammelin, Ammelid, Melem, Melon, Melam, Benzoguanamin, Acetoguanamin, Tetramethoxymethylbenzoguanamin, Caprinoguanamin, und/oder Butyroguanamin sind, und die C₁-C₁₀-Aldehyde insbesondere Formaldehyd, Acetaldehyd, Trimethylolacetaldehyd, Acrolein, Furfurol, Glyoxal und/oder Glutaraldehyd, besonders bevorzugt Formaldehyd, sind.

Die Melaminharze können ebenfalls 0,1 bis 10 Masse%, bezogen auf die Summe von Melamin und Melaminderivaten, eingebaute Phenole und/oder Harnstoff enthalten. Als Phenol komponenten sind dabei Phenol, C₁-C₉-Alkylphenole, Hydroxyphenole und/oder Bisphenole geeignet.

Beispiele für partielle Veretherungsprodukte von Melaminharzen mit C₁-C₁₀₋Alkoholen sind methylierte oder butylierte Melaminharze.

Beispiele für die in den Halbzeugen oder Formstoffen als Aminoplaste gegebenenfalls enthaltenen Harnstoff harze sind neben Harnstoff-Formaldehyd-Harzen ebenfalls Mischkondensate mit Phenolen, Säureamiden oder Sulfonsäureamiden.

Beispiele für die in den Halbzeugen oder Formstoffen als Aminoplaste gegebenenfalls enthaltenen Sulfonamidharze sind Sulfonamidharze aus p-Toluolsulfonamid und Formaldehyd.

Beispiele für die in den Halbzeugen oder Formstoffen als Aminoplaste gegebenenfalls enthaltenen Guanaminharze sind Harze, die als Guanaminkomponente Benzoguanamin, Acetoguanamin, Tetramethoxymethylbenzoguanamin, Caprinoguanamin und/oder Butyroguanamin enthalten.

Beispiele für die in den Halbzeugen oder Formstoffen als Aminoplaste gegebenenfalls enthaltenen Anilinharze sind Anilinharze, die als aromatische Diamine neben Anilin ebenfalls Toluidin und/oder Xylidine enthalten können.

Die in den Halbzeugen und Formstoffen aus Aminoplasten enthaltenen anorganischen Partikel mit Schichtstruktur sind bevorzugt Silikate, Phosphate, Arsenate, Titanate, Vanadate, Niobate, Molybdate und/oder Manganate, besonders bevorzugt Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskolt, Magadit, Rectorit, Halloysit, Kenyait, Sauconit, Borfluorphlogopite und/oder synthetische Schichtsilikate.

Beispiele für geeignete Phosphate mit Schichtstruktur sind Verbindungen der Formel H₂[M^{IV}(PO₄)₂]. ₓH₂O (M^{IV}=Zr, Ti, Ge, SN, Pb) und CaPO₄R·H₂O (R=CH₃; C₂H₅).

Beispiele für geeignete Arsenate mit Schichtstruktur sind Verbindungen der Formel H₂[M^{IV}(AsO₄)₂] . ₓH₂O und H[Mn(AsO₄)₂] . ₓH₂O.

Beispiele für geeignete Titanate mit Schichtstruktur sind Verbindungen der Formel Na₄Ti₉O₂₀. ₓH₂O und K₂Ln₂Ti₃O₁₀XH₂O.

Synthetische Schichtsilikate werden beispielsweise durch Umsetzung von natürlichen Schichtsilikaten mit Natriumhexafluorosilikat erzielt.

Insbesondere werden solche Schichtsilikate bevorzugt, deren Schichten einen Schichtabstand von rd. 0,4 nm bis 1,5 nm besitzen.

Bevorzugte flächige Trägermaterialien, die in den erfindungsgemässen Halbzeugen und Formstoffen enthaltenen sein können, sind Papier, Pappe, Holzerzeugnisse, Holzfaserplatten, Holzspanplatten, Glasfasergewebe, Vliese, Textilgewebe, Kunststofffolien, Kunststoffplatten, flächige Kunststoffteile, Metallfolien oder flächige Metallteile wie Karosserieteile im Automobilbereich oder Abdeckungen im Geräte- und Maschinenbau.

Als Füllstoffe können in den erfindungsgemässen Halbzeugen oder Formstoffen Al₂O₃, Al(OH)₃, Bariumsulfat, Calciumcarbonat, Glaskugeln, Kieselerde, Glimmer, Quarzmehl, Schiefermehl, Mikrohohlkugeln, Ruß, Talkum, Gesteinsmehl, Holzmehl, Cellulosepulver und/oder Schalen- und Kemmehle wie Erdnussschalenmehl oder Olivenkernmehl enthalten sein.

Beispiele für Verstärkerstoffe, die in den erfindungsgemässen Halbzeugen oder Formstoffen enthalten sein können, sind Holzfasern, Cellulosefasern, Flachs, Jute und Kenaf.

Bevorzugte Verstärkerstoffe sind anorganische Fasern, insbesondere Glasfasern und/oder Kohlenstofffasern, Naturfasern, insbesondere Cellulosefasern, und/oder Kunststofffasern, insbesondere Fasern aus Polyacrylhitril, Polyvinylalkohol, Polyvinylacetat, Polypropylen, Polyestern und/oder Polyamiden.

Bevorzugte polymere Dispergatoren, die in den erfindungsgemässen Halbzeugen oder Formstoffen enthalten sein können, sind wasserlösliche, in Wasser dispergierbare und/oder in Wasser emulgierbare Polymere.

Beispiele für wasserlösliche Polymere, die in den erfindungsgemässen Halbzeugen oder Formstoffen enthalten sein können, sind Polyvinylalkohol, Polyacrylamid, Polyvinylpyrrolidon, Polyethylenoxid, Methylcellulose, Ethylcellulose, Hydroxyethylcellulose und/oder Carboxymethylcellulose.

Die in den erfindungsgemässen Halbzeugen oder Formstoffen gegebenenfalls enthaltenen Wasser dispergierbaren bzw. in Wasser emulgierbaren Polymere sind Thermoplaste, Elastomere und/oder Wachse.

Beispiele für geeignete Thermoplaste sind Celluloseester, Celluloseether, Polyvinylacetat, Polyvinylpropionat, Polyacrylate, ungesättigte bzw. gesättigte Polyester, Maleinsäureanhydrid-Copolymere, Polypropylenoxid und/oder Ethylen-VinylacetatCopolymere. Als Maleinsäureanhydrid-Copolymere werden Copolymere bevorzugt, bei denen die Anhydridgruppen durch Amidierung und/oder Imidierung mit hydrophoben Kohlenwasserstoffsubstituenten oder durch Veresterung mit hydrophilen Polyalkylenoxidsubstituenten modifiziert sind.

Beispiele für in Wasser dispergierbare bzw. in Wasser emulgierbare Elaste sind Styren-Butadien-Kautschuke, Acrylatkautschuke, Polyurethane und/oder Fluorelastomere.

Beispiele für geeignete Wachse sind Polyolefinoxidatwachse wie Polyethylenwachsoxidate oder Wachse auf Basis von Ethylen-Vinylacetat-Copolymeren.

Besonders bevorzugte polymere Dispergatoren, die in den erfindungsgemässen Hatbzeu-gen oder Formstoffen gegebenenfalls enthalten sind, sind Polyvinylalkohol, Polyvinylacetat, Maleinsäureanhydrid-Copolymere und/oder ungesättigte bzw. gesättigte Polyester.

Die üblichen Zusatzstoffe, die in den erfindungsgemässen Halbzeugen und Formstoffen enthalten sein können, sind insbesondere 0,1 bis 30 Masse% Flammschutzmittel und/oder 0,05 bis 1 Masse% Stabilisatoren.

Beispiele für geeignete Flammschutzmittel, die gegebenenfalls in den Halbzeugen oder Formstoffen enthalten sein können, sind Ammoniumphosphat, Ammoniumpolyphosphat, Antimontrioxid, Magnesiumphosphat, Decabromdiphenylether, Trisdibrompropylisocyanurat, Tetrabrombisphenol-bis-dibrompropylether und/oder Tris(trisbromneopentyl)phosphat.

Beispiele für geeignete Stabilisatoren, die insbesondere bei Lackharzbeschichtungen eingesetzt werden können, sind Bis(2,2,6,6-tetramethyl-4-piperidinyl)sebazat oder Benztriazolderivate wie 2-(2-Hydroxy-3,5-di-tert-amylphenyl)-2H-benztriazol oder 2-(2-Hydroxy-3-tert.butyl-5-methylphenyl)benztriazol.

Die Halbzeuge und Formstoffe aus Aminoplasten mit verbesserter Zähigkeit werden erfindungsgemäss nach einem Verfahren hergestellt, bei dem Mischungen aus Aminoplast-Vorkondensaten und, als Härter, 1 bis 30 Masse%, bezogen auf die Aminoplast-Vorkondensate, anorganischen Partikeln mit Schichtstruktur, die interlamellar austauschbare Kationen von Typ Alkali-, Erdalkali-, Aluminium-, Eisen- und/oder Mangan-Kationen besitzen, in Form wässriger Dispersionen bzw. Emulsionen mit einem Feststoffgehalt von 30 bis 80 Masse%, die gegebenenfalls bis 50 Masse% C₁-C₈-Alkohole, 0,1 bis 5 Masse% polymere Disper-gatoren und 0,01 bis 3 Masse% Detergentien enthalten können, nach an sich bekannten Verfahren
- nach Trocknung und nachfolgender thermischen Verarbeitung der Formmassen durch Pressen, Spritzguss, Schmelzspinnen oder Extrusion zu Pressteilen, Spritzgussteilen, Fäden oder Profilen ausgeformt und ausgehärtet werden, oder
- nach Konzentrierung der wässrigen Lösungen durch Zentrifugenspinnen, Fadenziehen, Extrudieren oder Fibrillierungsprozesse, gegebenenfalls unter nachfolgender Reckung, und Härtung zu Aminoplastfasern verarbeitet werden, oder
- durch Eintrag in eine emulgatorfreie wässrige Dispersion von festen oder flüssigen Kapselkernbildnern, Aushärtung und Sprühtrocknung zu Mikrokapseln verarbeitet werden, oder
- durch Eintrag in eine emulgatorfreie wässrige Dispersion von flüchtigen Kohlenwasserstoffen, Inertgasen und/oder anorganischen Carbonaten, und Austrag der Hohlpartikel entweder in Formen und Aushärtung zu geschlossenzelligen Schaumstoffen oder durch ein Formwerkzeug und Aushärtung zu geschlossenzelligen geschäumten Profilen verarbeitet werden, oder
- durch Eintrag in eine wässrige Treibmittelemulsion von flüchtigen Kohlenwasserstoffen, Inertgasen und/oder anorganischen Carbonaten, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen verarbeitet werden, oder
- nach Rezepturierung zu Lackharzlösungen bzw. Lackharzdispersionen und nachfolgend durch Auftrag der Lackharzlösungen bzw. Lackharzdispersionen auf flächige Trägermaterialien, Trocknung und Härtung zu Lackharzbeschichtungen verarbeitet werden, oder
- nach Rezepturierung zu Tränkharzlösungen bzw. Tränkharzdispersionen nachfolgend durch Tränkung von flächigen Trägermaterialien, Laminierung und Härtung zu Schichtpressstoffen bzw. Laminaten verarbeitet werden,
wobei, jeweils bezogen auf die Aminoplaste, 1 bis 400 Masse% Füll- und/oder Verstärkerstoffe und/oder 0,1 bis 5 Masse% übliche Zusatzstoffe vor und/oder während der Verarbeitung zu Halbzeugen oder Formstoffen zugesetzt werden können.

Die üblichen Zusatzstoffe, die bei dem erfindungsgemässen Verfahren zur Herstellung von Halbzeugen und Formstoffen aus Aminoplasten mit verbesserter Zähigkeit eingesetzt werden können, sind insbesondere 0,1 bis 3 Masse%, vorzugsweise 0,1 bis 0,6 Masse%, Tenside, 0,1 bis 2 Masse% Gleitmittel, 0,1 bis 30 Masse% Flammschutzmittel und/oder 0,05 bis 1 Masse% Stabilisatoren.

Als Tenside können bei dem Verfahren zur Herstellung von Halbzeugen und Formstoffen C₁₂-C₂₂- gesättigte oder ungesättigte Kohlenwasserstoffe mit Hydroxy- und/oder Carboxy-gruppen, anionenaktive Tenside, kationenaktive Tenside oder nichtionische Tenside eingesetzt werden.

Beispiele für C₁₂-C₂₂- gesättigte Kohlenwasserstoffe mit Hydroxy- und/oder Carboxy-gruppen sind Laurinsäure, Stearinsäure, Behensäure, Laurylalkohol, Stearylalkohol und Behenalkohol.

Beispiele für C₁₂-C₂₂- ungesättigte Kohlenwasserstoffe mit Hydroxy- und/oder Carboxygruppen sind Linolsäure, Linolensäure, Eleostearinsäure, Ölsäure, Eurucasäure, Oleylalkohol, Elaidylalkohol und Eurucylalkohol.

Beispiele für anionenaktive Tenside sind Metallsalze wie Natriumsalze von Alkylsulfonaten und Alkylarylsulfonaten mit 8 bis 20 C-Atomen im Alkylrest, Metallsalze von Sulfobern-steinsäureestern, sulfierten Ricinusölen, Alkylnaphthalinsulfonsäuren, Phenolsulfonsäuren sowie Schwefelsäurester wie C₁₂-C₁₈-Alkylhydrogensulfate oder C₁₆-C₁₈-Fettalkoholsulfate.

Beispiele für kationenaktive Tenside sind Ölsäuretriethanolaminester und Laurinpyridiniumchlorid.

Beispiele für nichtionische Tenside sind ethoxyliertes Ricinusöl, ethoxylierte Talkfettalkohole, ethoxylierte Stearinsäure oder Ölsäure oder ethoxyliertes Nonylphenol.

Die Rezepturierung der Formmassen zur Herstellung der Pressteile, Spritzgussteile oder Profile kann insbesondere durch Nassimprägnierung oder Trockenimprägnierung erfolgen. Beim Nassimprägnierungsverfahren wird die Lösung des Aminoplastvorkondensats, die anorganische Partikel mit Schichtstruktur mit interlamellar austauschbaren Kationen von Typ Alkali-, Erdalkali-, Aluminium-, Eisen- und/oder Mangan-Kationen als Härter dispergiert enthält, in Knetern mit den, Füllstoffen wie Zellstoff, Holzmehl, Textilschnitzeln, Textilfasern, Papierschnitzel, Papierfasern oder Glasfasern und üblichen Zusatzstoffen wie Gleitmitteln und Pigmenten homogenisiert und in Trockentrommeln bei Temperaturen unterhalb 80°C getrocknet. Beim Trokkenimprägnierungsverfahren werden zerkleinerte Aminoplast-Festharze oder sprühgetrocknete Aminoplast-Festharze, die anorganische Partikel mit Schichtstruktur mit interlamellar austauschbaren Kationen von Typ Alkali-, Erdalkali-, Aluminium-, Eisen- und/oder Mangan-Kationen als Härter enthält, mit Füllstoffen wie Holzmehl oder Gesteinsmehl und üblichen Zusatzstoffen wie Gleitmitteln und Pigmenten trocken vorgemischt und auf Walzwerken oder kontinuierlichen Knetern homogenisiert. Bevorzugte Verarbeitungstemperaturen liegen bei der Herstellung von Pressteilen bei 140°C bis 170°C und bei der Herstellung von Spritzgussteilen bei 155°C bis 180°C

Geeignete Verarbeitungshilfsmittel, die als übliche Zusatzstoffe bei der Herstellung der Halbzeuge oder Formstoffe zugesetzt werden können, sind Calciumstearat, Magnesiumstearat und/oder Wachse.

Bei der Herstellung von Melaminharzfasern als Aminoplasthalbzeuge werden Melamin mit Formaldehyd und/oder Mischungen aus 20 bis 99,9 Masse% Melamin und 0,1 bis 80 Masse% Melaminderivaten und/oder Triazinderivaten, gegebenenfalls unter Zusatz von 0,1 bis 10 Masse%, bezogen auf die Summe von Melamin, Melaminderivaten und Triazinderivaten, an Phenolen, mit Formaldehyd kondensiert, wobei das Molverhältnis Melamin/ Formaldehyd bzw. Melamin + Melaminderivat bzw. Triazinderivat / Formaldehyd bevorzugt 1 : 1,0 bis 1 : 4 beträgt. Die Faserherstellung erfolgt aus den hochkonzentrierten wässrigen Lösungen der Polykondensate (Feststoffgehalt 50 bis 70 Masse%) nach Zusatz der anorganischen Partikel mit Schichtstruktur, die interlamellar austauschbare Kationen von Typ Alkali-, Erdalkali-, Aluminium-, Eisen- und/oder Mangan-Kationen besitzen, als Härter, durch Zentrifugenspinnen, Fadenziehen, Extrudieren oder Fibrillierungsprozesse, gegebenenfalls nachfolgende Reckung, und Härtung. Beim Extrusionsverfahren wird die Spinnlösung durch eine Düse in eine auf 170 bis 320°C beheizte Atmosphäre (Luft oder Inertgas) gepresst, um die Entfernung der in der Spinnlösung enthaltenen Lösungsmittel und die Härtung der Faser in möglichst kurzer Zeit zu erreichen.

Die Herstellung von Mikrokapseln erfolgt durch Eintrag der Aminoplastvorkondensate in eine emulgatorfreie wässrige Dispersion von festen oder flüssigen Kapselkernbildnern und anorganischen Partikeln mit Schichtstruktur, die interlamellar austauschbare Kationen von Typ Alkali-, Erdalkali-, Aluminium-, Eisen- und/oder Mangan-Kationen besitzen, als Härter, und nachfolgende Aushärtung und Sprühtrocknung. Der Einsatz der Kapselkernbildner bei der Herstellung der Mikrokapseln wird durch das Anwendungsgebiet der Mikrokapseln bestimmt. Beispiele für feste Kapselkernbildner sind feindisperse Fotochemikalien, Herbizide, Pestizide, Agrochemikalien, Pharmaceutica, Pigmente, Farbstoffe, Flammschutzmittel, Katalysatoren, Magnetpartikel und Stabilisatoren. Beispiele für flüssige Kapselkernbildner sind Adhesive, Aromastoffe, Parfüme, Tinten und in Wasser dispergierbare Flüssigkeiten wie Öle.

Bei der Herstellung der geschlossenzelligen Schaumstoffe oder geschlossenzelligen geschäumten Profile als Aminoplast-Halbzeuge ist es von Vorteil, zur Erzielung einer feinteiligen emulgatorfreien wässrigen Dispersion der eingesetzten flüchtigen Kohlenwasserstoffe und/oder Inertgäse Gaseintrags-Mehrphasenpumpen einzusetzen. Den hergestellten Hohlpartikeln können vor der Verarbeitung zu Schaumstoffen oder Profilen 1 bis 20 Masse%; bezogen auf die eingesetzten Aminoplastvorkondensate, Prepolymere auf Basis von Epoxidharzen, Phenolharzen, Harnstoffharzen, Melaminharzen, Anilinharzen, Resorcinharzen und/ oder Polyesterharzen zugesetzt werden.

Beispiele für geeignete flüchtige Kohlenwasserstoffe, die bei der, Herstellung der geschlossenzelligen bzw. offenzelligen Halbzeuge oder Formstoffe aus Aminoplasten eingesetzt werden können, sind Butan, Pentan, Isopentan und/oder Hexan.

Bei der Herstellung von Lackharzbeschichtungen als Aminoplasthalbzeuge werden Aminoplastvorkondensate unter Zusatz von anorganischen Partikeln mit Schichtstruktur mit interlamellar austauschbare Kationen von Typ Alkali-, Erdalkali-, Aluminium-, Eisen- und/oder Mangan-Kationen als Härter, Pigmenten, und gegebenenfalls Füllstoffen, Stabilisatoren, Lösungsmitteln sowie Filmbildnern vom Typ Alkydharze, Epoxidharze und/oder Phenolharze rezepturiert, auf Trägermaterialien wie Holz aufgebracht und bei Temperaturen unterhalb 80°C ausgehärtet oder auf metallische Trägermaterialien aufgebracht und bei Temperaturen bis 180°C ausgehärtet.

Bei der Herstellung von Laminaten bzw. Schichtpressstoffen als Aminoplasthalbzeuge werden erfindungsgemäss flächige Trägermaterialien aus organischen oder anorganischen Fasern in Form von Bahnen, Geweben, Matten oder Vliesen mit der wässrigen Lösung des Aminoplastvorkondensats, die als Härter anorganische Partikel mit Schichtstruktur mit interlamellar austauschbare Kationen von Typ Alkali-, Erdalkali-, Aluminium-, Eisen- und/oder Mangan-Kationen enthalten, beispielsweise in Tränkanlagen imprägniert und in Trockenkanälen bei Temperaturen bis 140°C getrocknet und als Laminat ausgehärtet oder nach Schneiden und gegebenenfalls Einbringen von Zwischenlagen, z.B. aus Holz, Papier oder Pappe, in Mehretagenpressen zu Schichtpressstofftafeln verpresst. Die verbesserte Zähigkeit von Laminaten ist für die thermische Nachverarbeitbarkeit der Laminate bzw. Schichtpressstoffe von Bedeutung, bei denen bei geringen Biegeradien während der thermischen Nachverarbeitung eine Rissbildung ausgeschlossen werden muss.

Die als polymere Dispergatoren gegebenenfalls eingesetzten wasserlöslichen, in Wasser dispergierbaren und/oder in Wasser emulgierbaren Polymere können bei der Herstellung der erfindungsgemässen Halbzeuge und Formstoffe aus Aminoplasten in Abhängigkeit vom Dispergator als Lösung, Dispersion oder Emulsion in Wasser oder organischen Lösungsmitteln eingesetzt werden.

Die wasserlöslichen, in Wasser dispergierbaren und/oder in Wasser emulgierbaren Polymere können ebenfalls in situ gebildet werden, indem zu den als wässrige Dispersionen bzw. Emulsionen vorliegenden Mischungen aus Aminoplast-Vorkondensaten und anorganischen Partikeln mit Schichtstruktur vor der Verarbeitung zu Halbzeugen oder Formstoffen anstelle von polymeren Dispergatoren Mischungen aus ethylenisch ungesättigten Monomeren und thermisch zerfallenden Radikalbildnern zugesetzt werden, aus denen die wasserlöslichen, in Wasser dispergierbaren und/oder in Wasser emulgierbaren Polymere gebildet werden. Beispiele für geeignete ethylenisch ungesättigte Monomere sind Acrylamid, Vinylpyrrolidon, C₄₋C₁₈-(Meth)acrylsäureester und/oder Vinylacetat.

Die erfindungsgemässen Halbzeuge und Formstoffe verbesserter Zähigkeit sind insbesondere in Form von Pressteilen, Spritzgussteilen oder Profilen in der Elektrotechnik, Elektronik, im Küchen- und Sanitärbereich, der Geräteindustrie und im Maschinenbau; in Form von Feststoffe oder Flüssigkeiten enthaltenden Mikrokapseln für fotoempfindliche und druckempfindliche Foto- und Kopierpapiere sowie in der Pharmazie und Agrochemie; in Form von Fasern für Filtermaterialien und nichtbrennbare Textilien; in Form von geschlossenzelligen oder offenzelligen Schaumstoffen zur Wärme- und Schalldämmung im Bauwesen und in der Fahrzeugindustrie; in Form von Beschichtungen als Einbrennlackierungen in der Fahrzeug- und Geräteindustrie sowie für kratzfeste Holzlackierungen; in Form von imprägnierten flächigen Trägermaterialien in der Textilindustrie und Papierindustrie, 9 und in Form von Laminaten oder Schichtpressstoffen im Bauwesen und in der Möbelindustrie geeignet.

### Beispiel 1

In einem 150 Liter - Rührreaktor werden 35 kg 30% wässrige Formalinlösung, 9 kg Melamin, 3 kg Benzoguanamin und 2,5 kg Harnstoff eingetragen, mit Natronlauge auf pH=8,0 eingestellt und bei 75°C unter Rühren innerhalb 40 min kondensiert. Nach Abkühlung auf Raumtemperatur werden in der Lösung des Aminoplastvorkondensats 900 g Natriummontmorillonit (Südchemie AG Moosburg, BRD) dispergiert.

Im beheizbaren Kneter wird eine Mischung aus 3,3 kg gebleichter Sulfitcellulose, 1 kg Kreide und 120 g Magnesiumstearat mit 9 I der Natriummontmorillonit als Härter enthaltenden Aminoplastlösung imprägniert, homogenisiert, bei 80°C getrocknet, ausgetragen und granu-liert und die Formmassenpartikel in einer beheizbaren Presse bei einer Werkzeugtemperatur von 170°C und einem Pressdruck von 250 bar zu 4 mm - Platten 100 x 100 mm verarbeitet.

Ausgefräste Prüfstäbe besitzen folgende Eigenschaften:
Zugfestigkeit: 29 MPa Biegefestigkeit: 82 MPa Biege-E-Modul: 7600 MPa
Schlagzähigkeit : 11,0 kJ/m² Kerbschlagzähigkeit: 4,0 kJ/m²

### Beispiel 2

In einem 150 I - Rührreaktor werden 33 kg 30% wässrige Formalinlösung und 10 kg Melamin und 2,2 kg Harnstoff eingetragen und bei 80°C unter Rühren innerhalb 120 min kondensiert. Nach Abkühlung auf Raumtemperatur werden zu der Lösung des Aminoplastvorkohdensats 950 g Aluminiummontmorillonit (hergestellt aus Natriummontmorillonit durch Kationenaus-tausch Natrium gegen Aluminium) hinzugefügt und dispergiert.

Im beheizbaren Kneter wird eine Mischung aus 3,5 kg Textilschnitzel, 1 kg Lithopone und 120 g Calciumstearat mit 9,5 I der Aluminiummontmorillonit als Härter enthaltenden Aminoplastlösung imprägniert, homogenisiert, bei 80°C getrocknet, ausgetragen und granuliert und die Formmassenpartikel in einer beheizbaren Presse bei einer Werkzeugtemperatur von 170°C und einem Pressdruck von 250 bar zu 4 mm - Platten 100 x 100 mm verarbeitet.

Ausgefräste Prüfstäbe besitzen folgende Eigenschaften:
Zugfestigkeit: 31 MPa Biegefestigkeit: 85 MPa Biege-E-Modul: 8200 MPa
Schlagzähigkeit : 12,0 kJ/m² Kerbschlagzähigkeit: 5,0 kJ/m²

### Beispiel 3

In einem 150 Liter - Rührreaktor mit Rückflusskühler und Hochgeschwindigkeitsdispergator werden 30 kg einer 30% wässrigen Aldehydlösung aus Formaldehyd/Glyoxal 9:1, 7,5 kg Melamin, 2 kg Anilin und 2,0 kg 2-(2-Hydroxyethyl-amino)-4,6-diamino-1,3,5-triazin eingetragen, mit Natronlauge auf pH=7,0 eingestellt und bei 85°C unter Rühren innerhalb 30 min kondensiert. Nach Abkühlung auf Raumtemperatur werden in die Lösung des Aminoplastvorkondensats 850 g Natriummontmorillonit (Südchemie AG Moosburg, BRD) eingetragen und dispergiert.

Zur Herstellung der Laminate wird mit der Lösung des Aminoplastvorkondensats, die Natriummontmorillonit (Südchemie AG Moosburg, BRD) als Härter enthält und der noch jeweils 1 Masse% Benetzungs- und Trennmittel zugefügt werden, ein Dekorpapier (Flächenmasse 80 g/m²) und ein Kraftpapier als Kernpapier (Flächenmasse 180 g/m²) bei 25°C im-prägniert. Nach Trocknung im Umluftofen bei 140°C auf eine Flüchte von 7,2% besitzt das Dekorpapier einen Harzanteil von 55 Masse% und das Kraftpapier einen Harzanteil von 43 Masse%. Nachfolgend werden 2 Schichten des imprägnierten Dekorpapiers mit einem Kernpapier zwischenliegend in einer Collin-Laborpresse mit einem Druck von 100 bar bei 160°C 130 s zusammengepresst.

Zur Prüfung der Zähigkeit wurde die Nachverformbarkeit des resultierenden Laminats untersucht. Bei Biegung des Laminats um einen auf 160°C aufgeheizten 3 mm Metalldorn trat keine Rissbildung des Laminats auf.

## Patentansprüche

1. Verwendung von anorganischen Partikeln mit Schichtstruktur, die intertamellar austauschbare Kationen vom Typ Alkali-, Erdalkali-, Aluminium-, Eisen- und/oder Mangan-Kationen besitzen zum Härten von Aminoplastharzen.

2. Verwendung von anorganischen Partikeln mit Schichtstruktur zum Härten von Aminoplastharzen nach Anspruch 1, **dadurch gekennzeichnet, dass** die anorganischen Partikel mit Schichtstruktur Silikate, Phosphate, Arsenate; Titanate, Vanadate, Niobate, Molybdate und/oder Manganate, bevorzugt Schichtsilikate vom Typ Montmorillonit, Bentonit, Kaolinit, Muskovit, Hectorit, Fluorhectorit, Kanemit, Revdit, Grumantit, Ilerit, Saponit, Beidetit, Nontronit, Stevensit, Laponit, Taneolit, Vermiculit, Volkonskolt, Magadit, Rectorit, Halloysit, Kenyait, Sauconit, Borfluorphlogopite und/oder synthetische Schichtsilikate; sind.

3. Verwendung von anorganischen Partikeln mit Schichtstruktur zum Härten von Aminoplastharzen nach Anspruch 1, **dadurch gekennzeichnet, dass** die Aminoplastharze Melaminharze, Hamstoffharze, Cyanamidharze, Dicyandiamidharze; Guanaminharze, Sulfonamidharze und/oder Anilinharze sind.

4. Verwendung von anorganischen Partikeln mit Schichtstruktur zum Härten von Aminoplastharzen nach Anspruch 1, **dadurch gekennzeichnet, dass** die Aminoplastharze Polykondensate aus Melamin bzw. Melaminderivaten und C₁₋C₁₀-Aldehyden mit einem Molverhältnis Melamin bzw. Melaminderivat / C₁-C₁₀₋Aldehyden 1 : 1 bis 1: 6 sowie deren partielle Veretherurigsprodukte mit C₁-C₁₀₋Alkoholen sind, wobei die Melaminderiväte bevorzugt durch Hydroxy-C₁-C₁₀₋alkylgruppen , Hydroxy-C₁-C₄-alkyl(oxa-C₂-C₄-alkyl)₁₋₅-gruppen und/oder durch Amino-C₁-C₁₂-alkylgruppen substituierte Melamine, Diaminomethyltriazine und/oder Diaminophenyltriazine, besonders bevorzugt 2-(2-Hydroxyethylamino)-4,6-diamiho-1,3,5-triazin, 2-(5-Hydroxy-3-oxa-pentylamino)-4,6-diamino-1,3,5-triazin und/oder 2,4,6-Tris-(6-aminohexylamino)-1,3,5-triazin, Ammelin, Ammelid, Melem, Melon, Melam, Benzoguanamin, Acetoguanamin, Tetramethoxymethylbenzoguanamin, Caprinoguanamin und/oder Butyroguanamin sind, und die C₁-C₁₀-Aldehyde bevorzugt Formaldehyd, Acetaldehyd, Trimethylolacetaldehyd, Acrolein, Furfurol, Glyoxal und/oder Glutaraldehyd, besonders bevorzugt Formaldehyd, sind.

5. Verfahren zur Herstellung von Aminoplastharzen mit verbesserter Zähigkeit, **dadurch gekennzeichnet, dass** eine Mischung aus Aminoplastvorkondensat, mit anorganischen Partikeln mit Schichtstruktur, die interlamellar austauschbare Kationen vom Typ Aluminium-, Eisen- und/oder ManganKationen besitzen, in Form wässriger Dispersionen bzw. Emulsionen mit einem Feststoffgehalt von 30 - 80 Masse%, die gegebenenfalls bis 50 Masse% C,-C8Alkohole, 0,1 - 5 Masse% polymere Dispergatoren und 0,01 bis 3 Masse% Detergentien enthalten können, versetzt wird und
nach Trocknung und nachfolgender thermischen Verarbeitung der Formmassen durch Pressen, Spritzguss, Schmelzspinnen oder Extrusion zu Pressteilen, Spritzgussteilen, Fäden oder Profilen ausgeformt und ausgehärtet werden, oder
- nach Konzentrierung der wässrigen Lösungen durch Zentrifugenspinnen, Fadenziehen, Extrudieren oder Fibrillierungsprozesse, gegebenenfalls unter nachfolgender Reckung, und Härtung zu Aminoplastfasern verarbeitet werden, oder
- durch Eintrag in eine emulgatorfreie wässrige Dispersion von festen oder flüssigen Kapselkernbildnern, Aushärtung und Sprühtrocknung zu Mikrokapseln verarbeitet werden, oder
- durch Eintrag in eine emulgatorfreie wässrige Dispersion von flüchtigen Kohlenwasserstoffen, Inertgasen und/oder anorganischen Carbonaten, und Austrag der Hohlpartikel entweder in Formen und Aushärtung zu geschlossenzelligen Schaumstoffen oder durch ein Formwerkzeug und Aushärtung zu geschlossenzelligen geschäumten Profilen verarbeitet werden, oder
- durch Eintrag in eine wässrige Treibmittelemulsion von flüchtigen Kohlenwasserstoffen, Inertgasen und/oder anorganischen Carbonaten, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen verarbeitet werden, oder
- nach Rezepturierung zu Lackharzlösungen bzw. Lackharzdispersionen und nachfolgend durch Auftrag der Lackharzlösungen bzw. Lackharzdispersionen auf flächige Trägermaterialien, Trocknung und Härtung zu Lackharzbeschichtungen verarbeitet werden, oder
- nach Rezepturierung zu Tränkharzlösungen bzw. Tränkharzdispersionen nachfolgend durch Tränkung von flächigen Trägermaterialien, Laminierung und Härtung zu Schichtpressstoffen bzw. Laminaten verarbeitet werden,
wobei, jeweils bezogen auf die Aminoplaste, 1 bis 400 Masse% Füll- und/oder Verstärkerstoffe und/oder 0,1 bis 5 Masse% übliche Zusatzstoffe vor und/oder während der Verarbeitung zugesetzt werden können.

6. Mit Hilfe anorganischer Partikel mit Schichtstruktur, die interlamellar austauschbare Kationen vom Typ Aluminium-, Eisen- und/oder Mangan-Kationen enthalten, ausgehärtete Aminoplastharze.

7. Ausgehärtete Aminoplastharze nach Anspruch 6, **dadurch gekennzeichnet, dass** sie Pressteile, Spritzgussteile, Profile, Mikrokapseln, Fasern, geschlossenzellige oder offenzellige Schaumstoffe, Beschichtungen, Laminate, Schichtpressstoffe oder imprägnierte flächige Trägermaterialien sind.

8. Ausgehärtete Aminoplastharze nach Anspruch 6, **dadurch gekennzeichnet, dass** sie Pressteile, Spritzgussteile oder Profile in der Elektrotechnik, Elektronik, im Küchen- und Sanitärbereich, der Geräteindustrie und im Maschinenbau; in Form von Feststoffe oder Flüssigkeiten enthaltenden Mikrokapseln für fotoempfindliche und druckempfindliche Foto- und Kopierpapiere sowie in der Pharmazie und Agrochemie; in Form von Fasern für Filtermaterialien und nichtbrennbare Textilien; in Form von geschlossenzelligen oder offenzelligen Schaumstoffen zur Wärme- und Schalldämmung im Bauwesen und in der Fahrzeugindustrie; in Form von Beschichtungen als Einbrennlackierungen in der Fahrzeug- und Geräteindustrie sowie für kratzfeste Holzlackierungen; in Form von imprägnierten flächigen Trägermaterialien in der Textilindustrie und Papierindustrie, und in Form von Laminaten oder Schichtpressstoffen im Bauwesen und in der Möbelindustrie sind.

## Claims

1. Use of inorganic particles having a layer structure which have an interlamellar content of exchangeable cations of the type consisting of alkali metal, alkaline earth metal, aluminium, iron and/or manganese cations for curing aminoplast resins.

2. Use of inorganic particles having a layer structure for curing aminoplast resins according to Claim 1, **characterized in that** the inorganic particles having a layer structure are silicates, phosphates, arsenates, titanates, vanadates, niobates, molybdates and/or manganates, preferably sheet silicates of the type consisting of montmorillonite, bentonite, kaolinite, muscovite, hectorite, fluorohectorite, kanemite, revdite, grumantite, ilerite, saponite, beidelite, nontronite, stevensite, laponite, taneolite, vermiculite, volkonskoite, magadite, rectorite, halloysite, kenyaite, sauconite, borofluorophlogopites and/or synthetic sheet silicates.

3. Use of inorganic particles having a layer structure for curing aminoplast resins according to Claim 1, **characterized in that** the aminoplast resins are melamine resins, urea resins, cyanamide resins, dicyandiamide resins, guanamine resins, sulphonamide resins and/or aniline resins.

4. Use of inorganic particles having a layer structure for curing aminoplast resins according to Claim 1, **characterized in that** the aminoplast resins are polycondensates of melamine or melamine derivatives and C₁-C₁₀-aldehydes having a molar melamine or melamine derivative/C₁-C₁₀-aldehydes ratio of from 1:1 to 1:6 and the partial etherification products thereof with C₁-C₁₀₋alcohols, the melamine derivatives preferably being melamines, diaminomethyltriazines and/or diaminophenyltriazines substituted by hydroxy-C₁₋C₁₀-alkyl groups, hydroxy-C₁-C₄-alkyl (oxa-C₂-C₄₋alkyl)₁₋₅ groups and/or by amino-C₁-C₁₂-alkyl groups, particularly preferably 2-(2-hydroxyethylamino)-4,6-diamino-1,3,5-triazine, 2-(5-hydroxy-3-oxapentylamino)-4,6-diamino-1,3,5-triazine and/or 2,4,6-tris(6-aminohexylamino)-1,3,5-triazine, ammeline, ammelide, melem, melon, melam, benzoguanamine, acetoguanamine, tetramethoxymethylbenzoguanamine, caprinoguanamine and/or butyroguanamine, and the C₁-C₁₀-aldehydes preferably being formaldehyde, acetaldehyde, trimethylolacetaldehyde, acrolein, furfurol, glyoxal and/or glutaraldehyde, particularly preferably formaldehyde.

5. Process for the preparation of aminoplast resins, having improved toughness, **characterized in that** inorganic particles having a layer structure, which have an interlamellar content of exchangeable cations of the type consisting of aluminium, iron and/or manganese cations, in the form of aqueous dispersions or emulsions, respectively, having a solids content of 30 - 80% by mass, which may optionally contain up to 50% by mass of C₁-C₈-alcohols, 0.1 - 5% by mass of polymeric dispersants and from 0.01 to 3% by mass of detergents, are added to a mixture of aminoplast precondensate and
are shaped and cured after drying and subsequent thermal processing of the moulding materials by compression moulding, injection moulding, melt spinning or extrusion to give compression mouldings, injection mouldings, filaments or profiles, or
- are processed after concentration of the aqueous solutions by centrifugal spinning, filament drawing, extrusion or fibrillation processes, optionally with subsequent orientation, and curing to give aminoplast fibres, or
- are processed by introduction into an emulsifier-free aqueous dispersion of solid or liquid capsule core formers, curing and spray-drying to give microcapsules, or
- are processed by introduction into an emulsifier-free aqueous dispersion of volatile hydrocarbons, inert gases and/or inorganic carbonates and discharge of the hollow particles either into moulds and curing to give closed-cell foams or by means of a mould and curing to give closed-cell foamed profiles, or
- by introduction into an aqueous blowing agent emulsion of volatile hydrocarbons, inert gases and/or inorganic carbonates, heating to the boiling point or decomposition temperature of the blowing agent and discharge either into moulds and curing to give open-cell foams or by means of a mould and curing to give open-cell foamed profiles, or
- are processed after formulation to give coating resin solutions or coating resin dispersions, respectively, and by subsequent application of the coating resin solutions or coating resin dispersions, respectively to sheet-like substrate materials, drying and curing to give coatings comprising coating resin, or
- after formulation to give impregnating resin solutions or impregnating resin dispersions, respectively, are subsequently processed by impregnation of sheet-like substrate materials, lamination and curing to give laminates,
it being possible to add, in each case based on the aminoplasts, from 1 to 400% by mass of fillers and/or reinforcing materials and/or from 0.1 to 5% by mass of customary additives before and/or during the processing.

6. Aminoplast resins cured with the aid of inorganic particles having a layer structure, which have an interlamellar content of exchangeable cations of the type consisting of aluminium, iron and/or manganese cations.

7. Cured aminoplast resins according to Claim 6, **characterized in that** they are compression mouldings, injection mouldings, profiles, microcapsules, fibres, closed-cell or open-cell foams, coatings, laminates or impregnated sheet-like substrate materials.

8. Cured aminoplast resins according to Claim 6, **characterized in that** they are compression mouldings, injection mouldings or profiles in the electrical sector, electronics, in the kitchen and sanitary sector, in the equipment industry and in mechanical engineering; in the form of microcapsules containing solids or liquids, for photosensitive and pressure-sensitive photographic and copying papers and in pharmacy and agrochemistry; in the form of fibres, for filter materials and nonflammable textiles; in the form of closed-cell or open-cell foams, for heat and sound insulation in construction and in the vehicle industry; in the form of coatings, as baking finishes in the vehicle and equipment industry and for scratch-resistant wood coatings; in the form of impregnated sheet-like substrate materials, in the textile industry and paper industry; and in the form of laminates, in construction and in the furniture industry.

## Revendications

1. Utilisation de particules inorganiques à structure en couches, qui possèdent, en vue du durcissement de résines aminoplastes, des cations, échangeables d'une manière interlamellaire, du type cation alcalin, cation alcalino-terreux, cation d'aluminium, de fer et/ou de manganèse.

2. Utilisation de particules inorganiques à structure en couches en vue du durcissement de résines aminoplastes selon la revendication 1, **caractérisée en ce que** les particules inorganiques à structure en couches sont des silicates, des phosphates, des arséniates, des titanates, des vanadates, des niobates, des molybdates et/ou des manganates, de préférence, des silicates stratifiés du type montmorillonite, bentonite, kaolinite, moscovite, hectorite, fluorohectorite, kanémite, revdite, grumantite, liévrite, saponite, beidellite, nontronite, stévensite, laponite, tanéolite, vermiculite, volchonskoïte, magadiite, rectorite, halloysite, kenyaïte, sauconite, borofluorophlogopite et/ou des silicates stratifiés synthétiques.

3. Utilisation de particules inorganiques à structure en couches en vue du durcissement de résines aminoplastes selon la revendication 1, **caractérisée en ce que** les résines aminoplastes sont des résines de mélamine, des résines d'urée, des résines de cyanamide, des résines de dicyandiamide, des résines de guanamine, des résines de sulfonamide et/ou des résines d'aniline.

4. Utilisation de particules inorganiques à structure en couches en vue du durcissement de résines aminoplastes selon la revendication 1, **caractérisée en ce que** les résines aminoplastes sont des polycondensats de la mélamine ou de dérivés de mélamine et d'aldéhydes en C₁₋C₁₀ ayant un rapport molaire mélamine ou dérivés de mélamine/aldéhydes en C₁-C₁₀ de 1 : 1 à 1 : 6 ainsi que leurs produits d'éthérification partiels avec des alcools en C₁-C₁₀, les dérivés de mélamine étant des mélamines, des diaminométhyltriazines et/ou des diaminophényltriazines substituées de préférence par des groupements hydroxy-C₁-C₁₀-alkyles, des groupements hydroxy-C₁-C₄-alkyl (oxa-C₂-C₄-alkyle)₁₋₅ et/ou des groupements amino-C₁-C₁₂-alkyles, particulièrement préférablement, la 2-(2-hydroxyéthylamino)-4,6-diamino-1,3,5-triazine, la 2-(5-hydroxy-3-oxa-pentylamino)-4,6-diamino-1,3,5-triazine et/ou la 2,4,6-tris-(6-aminohexylamino)-1,3,5-triazine, l'amméline, l'ammélide, le melem, le melon, le melam, la benzoguanamine, l'acétoguanamine, la tétraméthoxyméthylbenzoguanamine, la caprinoguanamine et/ou la butyroguanamine, et les aldéhydes en C₁-C₁₀ étant, de préférence, le formaldéhyde, l'acétaldéhyde, le triméthylolacétaldéhyde, l'acroléine, le furfurol, le glyoxal et/ou le glutaraldéhyde, particulièrement préférablement, le formaldéhyde.

5. Procédé en vue de la fabrication de résines aminoplastes ayant une ténacité améliorée, **caractérisé en ce qu'**un mélange de pré-condensat aminoplaste est mis en réaction avec des particules inorganiques à structure en couches, qui possèdent des cations du type cation d'aluminium, de fer et/ou de manganèse, échangeables d'une manière interlamellaire, sous la forme de dispersions ou d'émulsions aqueuses, ayant une teneur en substances solides de 30 - 80% en masse, qui peuvent contenir, le cas échéant, jusqu'à 50% en masse d'alcools en C₁-C₈, 0, 1 - 5% en masse d'agents de dispersion polymères et de 0,01 à 3% en masse d'agents détergents et
**en ce qu'**après séchage et traitement thermique subséquent des matières moulables par compression, par moulage par injection, par filature en fusion ou par extrusion, ces dernières sont mises en forme et durcies pour former des pièces moulées, des pièces moulées par injection, des fils ou des profilés ou
- **en ce qu'**après concentration des solutions aqueuses par centrifugation, par filage, par extrusion ou par processus de fibrillation, le cas échéant, après étirage subséquent et durcissement, ce mélange est traité pour former des fibres aminoplastes ou
- **en ce que**, par introduction dans une dispersion aqueuse, exempte d'émulsifiant, d'agents formateurs de noyaux de capsule solides ou liquides, par durcissement et par séchage par pulvérisation, ce mélange est traité pour former des microcapsules ou
- **en ce que**, par introduction dans une dispersion aqueuse, exempte d'émulsifiant, d'hydrocarbures volatils, de gaz inertes et/ou de carbonates inorganiques, et par évacuation des particules creuses dans des moules et par durcissement, ce mélange est traité pour former des mousses à cellules fermées ou, grâce à un outil de formage et à un durcissement, est traité pour former des profilés alvéolaires à cellules fermées ou
- **en ce que**, par introduction dans une émulsion aqueuse d'agents propulseurs d'hydrocarbures volatils, de gaz inertes et/ou de carbonates inorganiques, par échauffement à la température d'ébullition ou de décomposition de l'agent propulseur et par évacuation dans des moules et par durcissement, ce mélange est traité pour former des mousses à cellules ouvertes ou grâce à un outil de formage et par durcissement, est traité pour former des profilés alvéolaires à cellules ouvertes ou
- après formulation, ce mélange est traité pour former des solutions de résines pour vernis ou des dispersions de résines pour vernis et ensuite par application des solutions de résines pour vernis ou des dispersions de résines pour vernis sur des matériaux subjectiles plats, par séchage et par durcissement, pour former des revêtements de résines pour vernis ou
- après formulation pour former des solutions de résines d'imprégnation ou des dispersions de résines d'imprégnation, ce mélange est traité ensuite par imprégnation de matériaux subjectiles plats, par laminage et par durcissement, pour former des substances comprimées à couches ou des stratifiés,
étant donné qu'à chaque fois l'on peut ajouter, avant et/ou pendant le traitement, par rapport aux aminoplastes, de 1 à 400% en masse de charges ou d'agents de renforcement et/ou de 0,1 à 5% en masse des additifs usuels.

6. Résines aminoplastes durcies à l'aide de particules inorganiques à structure en couches, qui contiennent des cations échangeable d'une manière interlamellaire du type cation d'aluminium, de fer et/ou de manganèse.

7. Résines aminoplastes durcies selon la revendication 6, **caractérisées en ce qu'**elles sont des pièces moulées, des pièces moulées par injection, des profilés, des microcapsules, des fibres, des mousses à cellules fermées ou à cellules ouvertes, des revêtements, des stratifiés, des substances comprimées à couches ou des matériaux subjectiles plats imprégnés.

8. Résines aminoplastes selon la revendication 6, **caractérisées en ce qu'**elles sont des pièces moulées, des pièces moulées par injection ou des profilés dans l'électrotechnique, l'électronique, dans le secteur des cuisines et le secteur sanitaire, l'industrie des appareillages et dans la construction de machines ; sous la forme de microcapsules contenant des solides ou des liquides pour des papiers de photographie et de photocopie photosensibles et sensibles à la pression ainsi que dans la pharmacie et dans l'agrochimie ; sous la forme de fibres pour matériaux de filtre et de textiles non combustibles ; sous la forme de mousses à cellules fermées ou à cellules ouvertes en vue de l'isolation thermique et sonique dans le secteur de la construction et dans le secteur de l'industrie automobile ; sous la forme de revêtements en tant que vernis à cuire dans l'industrie automobile et l'industries des appareillages ainsi que pour des vernis à bois résistants aux rayures ; sous la forme de matériaux subjectiles plats imprégnés dans l'industrie des textiles et l'industrie du papier et sous la forme de stratifiés et de substances comprimées en couches dans le secteur de la construction et dans l'industrie des meubles.
